# EUROPÄISCHE PATENTSCHRIFT

(11) **EP 1 155 907 B1**
(45) Veröffentlichungstag und Bekanntmachung des Hinweises auf die Patenterteilung: **29.03.2006**
(21) Anmeldenummer: 01110216.7
(22) Anmeldetag: 25.04.2001
(51) Int. Cl.: B60Q 1/04

(54) **Kraftfahrzeug mit einer Leuchteinheit**
Lighting unit for vehicle
Unité d'éclairage de véhicule

(30) Priorität: 15.05.2000 DE 10023570
(43) Veröffentlichungstag der Anmeldung: 21.11.2001
(73) Patentinhaber: DaimlerChrysler AG, 70567 Stuttgart (DE)
(72) Erfinder: Baumann, Karl-Heinz, 71149 Bondorf (DE); Bruhnke, Ulrich, 71139 Ehningen (DE)

(56) Entgegenhaltungen:
- EP-A- 0 291 385
- EP-A- 0 519 776
- EP-A- 0 999 094
- EP-A- 1 122 126
- FR-A- 2 785 242
- FR-A- 2 789 028
- GB-A- 1 452 727
- US-A- 5 819 408
- PATENT ABSTRACTS OF JAPAN vol. 1997, no. 02, 28. Februar 1997 (1997-02-28) & JP 08 268149 A (NISSAN MOTOR CO LTD), 15. Oktober 1996 (1996-10-15)

## Beschreibung

Die Erfindung betrifft ein Kraftfahrzeug mit einer Leuchteinheit nach dem Oberbegriff des Patentanspruchs 1.

Bei einem solchen, der DE 197 32 301 A als bekannt zu entnehmenden Kraftfahrzeug ist eine Leuchteinheit vorgesehen, die am vorderen Ende einer Tragstruktur des Fahrzeugs angeordnet ist. Dabei bilden ein Reflektor mit einer lichtdurchlässigen Scheibe und einem Leuchtengehäuse eine Baueinheit, die von einem rohrartigen, die Baueinheit umfangsseitig umschließenden und energieabsorbierenden Deformationsglied aufgenommen ist. Hierzu ist die Baueinheit in axialer Richtung in das rohrartige Deformationsglied einschiebbar und in der Einbaulage sicherbar. Das Deformationsglied ist axial an einer Radlaufwand abgestützt und kollabiert unter Längenverkürzung bei einer übermäßigen Aufprallbelastung. Allerdings ist die bekannte Anordnung materialaufwendig und weist ein relativ hohes Gewicht auf.

Aus der nicht vorveröffentlichten EP 1 120 309 A2 ist bereits ein Scheinwerfergehäuse als bekannt zu entnehmen, bei der ein Reflektor, eine lichtdurchlässige Scheibe und ein Leuchtengehäuse eine Baueinheit bilden. Das im Wesentlichen zylindrisch ausgebildete Leuchtengehäuse ist dabei über eine Befestigungsvorrichtung am vorderen Ende des Kraftwagens festgelegt. Der den Reflektor umfangsseitig einhausende Seitenabschnitt umfasst dabei zwei Teilabschnitte, welche über eine Sollbruchstelle miteinander verbunden sind. Im Falle einer Kollision, beispielsweise mit einem Fußgänger, soll das Leuchtengehäuse nachgeben, in dem die Sollbruchstelle bricht. Die Sollbruchstelle ist dabei so ausgelegt, dass sie bei einer Krafteinwirkung bricht, die betragsmäßig kleiner ist als die Kraft, die bei einer Kollision mit einer Person, insbesondere im Bereich des Oberschenkels, Verletzungen erzeugt. Zudem ist die Sollbruchstelle so ausgelegt, dass diese bricht bevor die äußere Lichtscheibe zersplittert. Nach dem Brechen der Sollbruchstelle verschieben sich die beiden Teilabschnitte des Seitenabschnitts über einen erheblichen Längenbereich teleskopartig zueinander, so dass das Leuchtengehäuse beim Aufprall beispielsweise einem Menschen keinen weiteren Widerstand entgegensetzt.

Aus der EP 0 999 094 A2 ist außerdem ein Scheinwerfer als bekannt zu entnehmen, der im Wesentlichen ein nach vorne hin durch eine Abdeckscheibe und nach hinten hin durch eine Kappe verschließbares Leuchtengehäuse umfasst. Die Kappe dient dabei als an der Karosserie befestigte Gehäusehalterung, in welche das Leuchtengehäuse eingesteckt und befestigt werden kann. Innerhalb des Leuchtengehäuses sind dabei zwei Leuchteinheiten angeordnet, deren Reflektoren von dem Gehäuse umfangsseitig eingehaust sind. Um einen möglichst kompakten und kostengünstigen Scheinwerfer zu erhalten, sind die Gehäuseteile des vorliegenden Scheinwerfers einfach und leicht montierbar gestaltet.

Schließlich ist aus der GB-A-1 452 727 ein Gattungsmäsiges Kraftfahzeug mit einer Leucheinheit bekannt, es offenbart ein Stoßstangen-Eckstück mit eingebetteter Scheinwerfer dessen Scheinwerfergehäuse auf seiner der Fahrzeugmitte zugewandten Schmalseite mittels eines Schraubbolzens an benachbarten Karosserieteilen befestigt ist. Bei einer entsprechend großen Aufprallbelastung des Stoßstangeneckstücks wird dieses und somit auch das Scheinwerfergehäuse um den Schraubbolzen verschwenkt, wobei das andere Ende mittels einer Schraube in einem Langloch in Fahrzeuglängsrichtung gesehen nach hinten verschoben wird. Nachdem die Schraube in dem Langloch die Endposition erreicht hat, erfolgt eine Deformation des Scheinwerfergehäuses durch die weitere Schwenkbewegung um den Schraubbolzen.

Der Erfindung liegt daher die Aufgabe zugrunde, ein Kraftfahrzeug mit einer Leuchteinheit zu schaffen, die bedeutend einfacher aufgebaut sein kann und gewichtsgünstiger herzustellen ist.

Die erfindungsgemäße Lösung dieser Aufgabe ergibt sich aus den Merkmalen des Hauptanspruchs.

Vorteilhafte Ausgestaltungen der Erfindung sind den übrigen Ansprüchen zu entnehmen.

Gemäß der Erfindung ist das ohnehin vorhandene Leuchtengehäuse selbst als energieabsorbierendes Deformationsglied ausgebildet, wobei die Einsparung an Bauteilen einen vereinfachten und kostengünstigen Aufbau der Leuchteinheit ermöglicht. Dabei kann die Anordnung mit Leuchteinheit auf einfache Weise austauschbar gestaltet werden, so dass bei leichten oder mittleren Aufprallbelastungen lediglich das Gehäuse der Leuchteinheit verformt und anschließend auf relativ kostengünstige Art ausgetauscht werden kann.

Wenn die Gegenfläche der Tragstruktur in einer weitgehend vertikalen Fahrzeugquerebene angeordnet ist und etwa parallel zur rückwärtigen Stirnseite des Leuchtengehäuses verläuft, kann eine besonders wirksame Abstützung des Leuchtengehäuses an der Tragstruktur geschaffen werden.

Als besonders vorteilhaft hat sich eine Scheibe aus schlagzähem Polycarbonat gezeigt, die entlang ihrem Umfang zur gleichmäßigen Verteilung der auftretenden Unfallkräfte fest mit der nach außen gewandten Stirnseite des Leuchtengehäuses verbunden ist.

Bevorzugt ist die Gegenfläche als Bereich einer Abschlusswand ausgebildet, die den Bagatellschadenbereich der Tragstruktur von der dahinterliegenden Knautschzone für schwerere Unfälle trennt. Dabei können die vor der Abschlußwand liegenden Bauteile wie die Leuchteinheiten bei einem Unfall verformt werden, ohne daß die dahinterliegende Struktur bereits Deformationen erfährt.

Besonders einfach wechselbar ist die Anordnung durch ein in Führungen einschiebbares Leuchtengehäuse, das in der eingeschobenen Einbaulage durch Fixiermittel in seiner endgültigen Lage festzulegen ist.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig.1 und 2: jeweils eine Perspektivansicht von schräg vorne oben auf eine in Fig.2 teilweise mit Verkleidungsteilen beplankte Tragstruktur eines Kraftwagens, die eine großformatige vordere und hintere Abschlusswand umfaßt, an denen jeweils erfindungsgemäße Leuchteinheiten anzuordnen sind;
- Fig.3: eine ausschnittsweise, schematische Perspektivansicht auf die vordere Abschlußwand der Tragstruktur mit einer an dieser befestigten Leuchteinheit nach der Erfindung;
- Fig.4: eine schematische Draufsicht auf die vordere Abschlußwand und die an dieser befestigte Leuchteinheit gemäß Fig.3; und in
- Fig.5: eine schematische, perspektivische Seitenansicht auf die vordere Abschlußwand und die daran befestigte Leuchteinheit nach den Figuren 3 und 4.

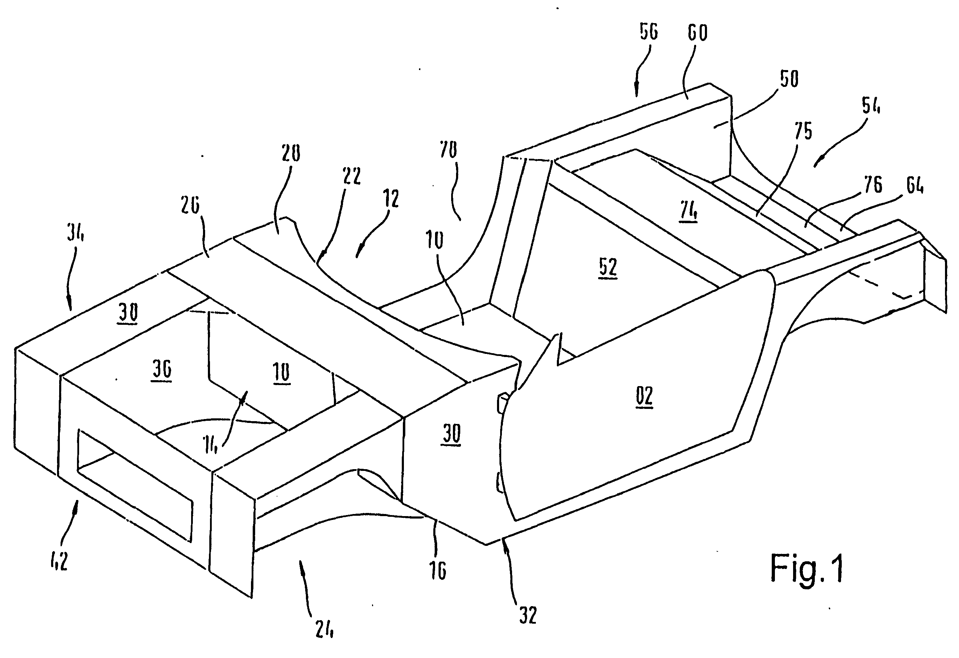

In Fig.1 ist in Perspektivansicht von schräg vorne oben eine überwiegend energieabsorbierende, eigensteife und ebene Leichtbauplatten aufweisende Tragstruktur eines Kraftwagens dargestellt. Die Leichtbauplatten.sind vorzugsweise je nach Anforderung in Sandwichbauweise, mit Wabenstruktur, in Holz, in Aluminium, als Faserverbund, als Strangpreßprofil oder dgl. gefertigt. Um günstige Fertigungsbedingungen zu erreichen, können die einzelnen Plattenabschnitte sowohl einteilig ausgebildet und abgewinkelt als auch mehrteilig gefügt sein. Vorn im Fußraumbereich 12 geht ein tragender Boden 10 in eine Stirnwand 14 in Leichtbauweise über, die einen an den Boden 10 anschließenden Übergangsbereich 16 und einen etwa vertikalen Bereich 18 umfaßt. Seitlich und oben ist der Fußraumbereich 12 von einer Plattenanordnung begrenzt, die eine vordere und eine hintere obere Leichtbauplatte 26,28 sowie seitliche Stützkastenwände 30 umfaßt, die gemeinsam mit dem Boden 10 und der Stirnwand 14 einen Stützkasten 22 für eine an diesem befestigte Vorbaustruktur 24 bilden.

Die als Knautschzone ausgebildete Vorbaustruktur 24 umfaßt zwei vordere Längsträger 34, die jeweils einen abgewinkelten Querschnitt mit einem etwa vertikalen Plattenschenkel 36 und einen quer dazu verlaufenden Plattenschenkel 38 aufweisen. Am vorderen Ende der Längsträger 34 ist eine in Fahrzeugquerrichtung und etwa vertikal verlaufende vordere Abschlußwand 42 befestigt, die hier aus einem Strangpressprofil besteht. Die Leichtbauplatte 42 kann sowohl einteilig als auch - wie hier gezeigt - mehrteilig gefügt ausgebildet sein.

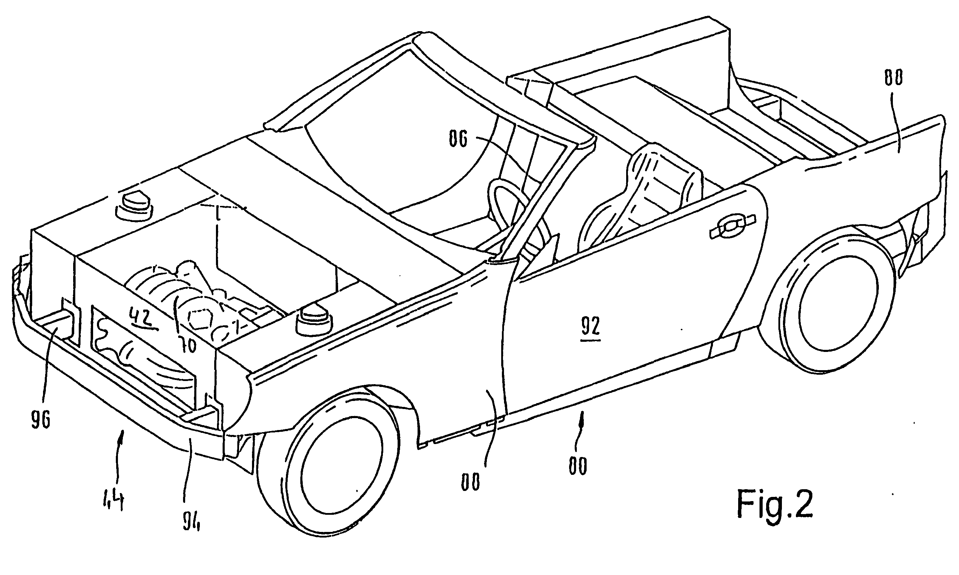

Hinten geht der Boden 10 in eine schräg nach hinten oben ragende Hecktrennwand 52 über, hinter der sich eine als Knautschzone ausgebildete Heckstruktur 54 mit hinteren Längsträgern 56 anschließt. Diese weisen jeweils einen in Fahrzeughochrichtung und einen in Fahrzeuglängsrichtung abgewinkelten Plattenschenkel 58,60 auf. Am hinteren Ende der hinteren Längsträger 56 ist eine hintere Abschlußwand 64 befestigt, die in Fahrzeugquerrichtung sowie etwa vertikal verläuft. Die hinteren Längsträger 56 sind über eine Plattenanordnung aus Leichtbauplatten 74,75,76 fest miteinander zu einem Kasten verbunden. Eine sich zwischen der vorderen und hinteren Abschlußwand 42,64 erstreckende Seitenwand 32 weist einen Türausschnitt 78 für eine Seitentür 80. (Fig.2) auf, von der hier lediglich eine linke Türinnenwand 82 dargestellt ist.

Die in Fig.2 in Perspektivansicht gezeigte Tragstruktur gemäß Fig.1 ist unter einer Beplankung angeordnet, von der hier an entsprechenden Aufnahmen der Tragstruktur festgelegte Verkleidungsteile 88 des rechten vorderen und hinteren Kotflügels gezeigt sind. An der Vorderseite der vorderen Abschlusswand 42 ist zusätzlich ein Frontmodul 44 erkennbar, welches einen über zwei Längsschenkel 96 an der Leichtbauplatte 42 festgelegten Querträger 94 umfasst.

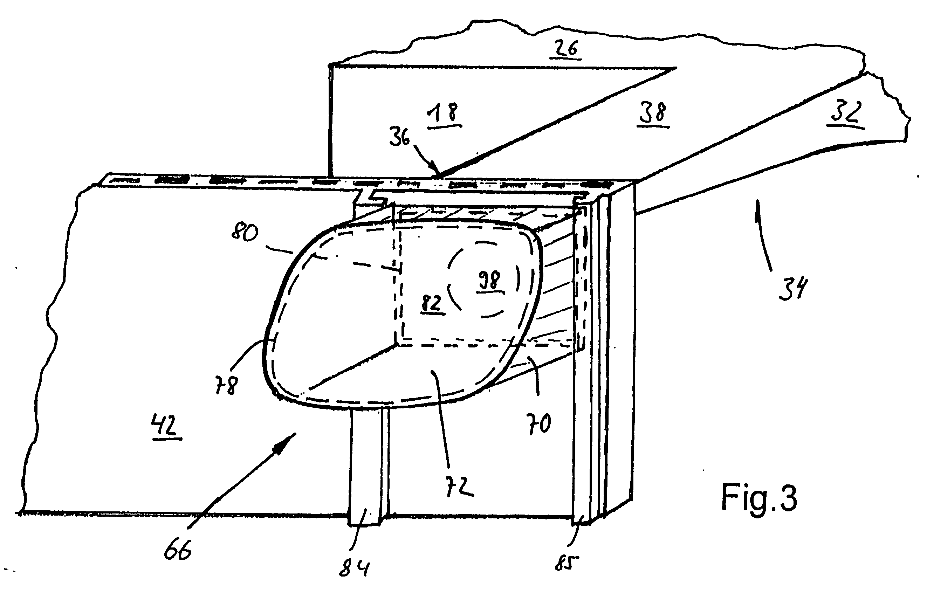

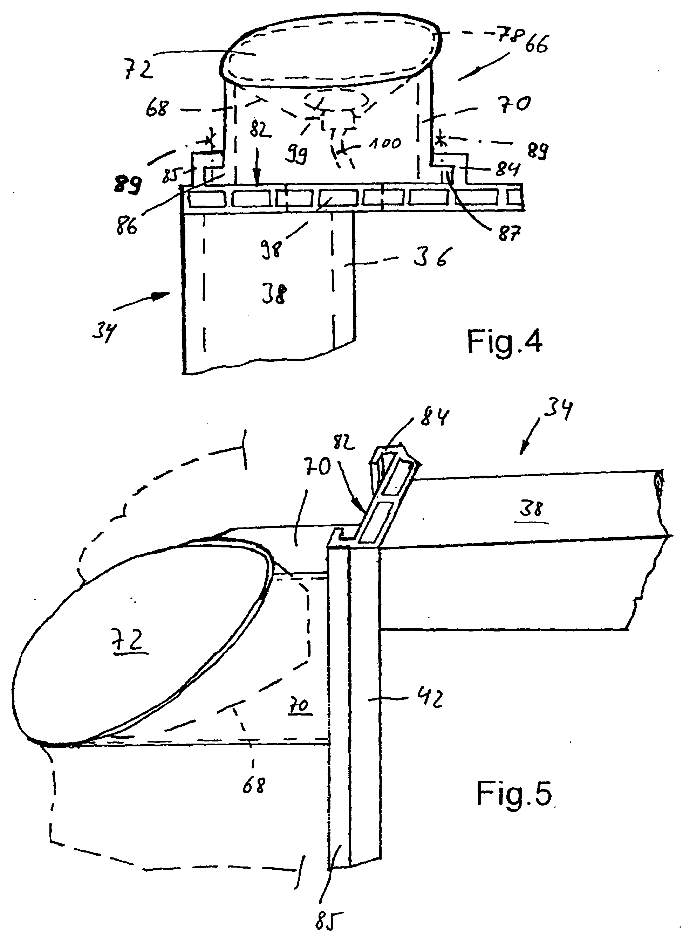

Fig.3 zeigt in schematischer Perspektivansicht auschnittsweise die vordere, im Bereich des vorderen Längsträgers 34 befestigte Abschlusswand 42, an deren Vorderseite eine Leuchteinheit 66 angeordnet ist. Die Leuchteinheit 66 umfasst ein Leuchtengehäuse 70, welches den Umfang eines zugehörigen, in den Figuren 4 und 5 schematisch angedeuteten Reflektors 68 umschließt und als energieabsorbierendes Deformationsglied ausgebildet ist. Das Leuchtengehäuse 70 ist hierzu vorzugsweise aus einem energieabsorbierenden Kunststoff wie CFK oder FVK oder einer Metalllegierung gefertigt. Auf die Wirkungsweise der Leuchteneinheit bei einer übermäßigen Aufprallbelastung wird im weiteren noch näher eingegangen. Der Reflektor 68 und das diesen aufnehmende Leuchtengehäuse 70 bilden mit einer lichtdurchlässigen Scheibe 72 eine Baueinheit. Die Scheibe 72 ist hier aus Polycarbonat hergestellt und entlang ihrem Umfang kraftverteilend mit der nach vorne gewandten, gestrichelt angedeuteten Stirnseite 78 des Leuchtengehäuses 70 verbunden. Demgemäß ist das Leuchtengehäuse 70 mit seiner vorderen Stirnseite 78 an den Umfang der Scheibe 72 angepasst. Der im vorderen Bereich an die Scheibe 72 angepasste Querschnitt des Leuchtengehäuses 70 geht in Richtung der gestrichelt angedeuteten rückwärtigen Stirnseite 80 in einen etwa rechteckigen Querschnitt über. Mit diesem etwa rechteckigen hinteren Stirnseite 80 stützt sich das Leuchtengehäuse 70 bei übermäßiger Aufprallbelastung axial an einer Gegenfläche 82 der vorderen Abschlusswand 42 unter Längenverkürzung ab. Die Gegenfläche 82 verläuft hier als ein ebener Bereich der Abschlusswand 42 in einer vertikalen Fahrzeugquerebene, an der sich die rückwärtige Stirnseite 80 des Leuchtengehäuses 70 bereits in der Einbaulage abstützt. Es wäre jedoch auch denkbar, dass die rückwärtige Stirnseite 80 in der Einbaulage im Abstand vor der Gegenfläche 82 endet und sich erst infolge einer unfallbedingten Verschiebung in Richtung der Abschlusswand 42 an dieser abstützt. Hierbei erstreckt sich die rückwärtige Stirnseite 80 vorzugsweise etwa parallel zur Gegenfläche 82, damit sich das Leuchtengehäuse 70 bei seiner unfallbedingten Verschiebung mit der rückwärtigen Stirnfläche 80 kraftverteilend an der Gegenfläche 82 abstützen kann. In diesem Zusammenhang wäre es auch denkbar, dass die Gegenfläche 82 in einer zur Abschlusswand 42 geneigten Fläche angeordnet ist. Um eine einfache Befestigung der Leuchteneinheit 66 an der vorderen Abschlusswand 42 zu ermöglichen, sind an dieser etwa vertikal verlaufende Schiebeführungen 84,85 vorgesehen, in die das Leuchtengehäuse 70 mit seinem rückwärtigen Bereich eingeschoben ist. Die beiden Schiebeführungen 84,85 sind hier im Querschnitt L-förmig sowie einteilig mit dem Strangpressprofil der Abschlusswand 42 ausgebildet. Um eine besonders gute Abstützung der Leuchteinheit 66 an der Tragstruktur zu gewährleisten, liegt die Gegenfläche 82 hier etwa im Überdeckungsbereich mit dem zugeordneten Ende des Längsträgers 34.

In Fig.4 ist in schematischer, ausschnittsweiser Draufsicht die durch das vordere Ende des linken Längsträgers 35 getragene vordere Abschlusswand 42 und die an dieser befestigte Leuchteinheit 66 gemäß Fig.3 gezeigt, wobei insbesondere die einteilige Ausbildung der Schiebeführungen 84,85 und der Abschlusswand 42 erkennbar ist. An seinem etwa rechtwinkligen rückwärtigen Bereich ist das Leuchtengehäuse 70 mit vertikal verlaufenden Führungsleisten 86,87 versehen, die sich über etwa die gesamte Höhe des Leuchtengehäuses 70 erstrecken und mit denen das Leuchtengehäuses 70 in die Schiebeführungen 84,85 eingeschoben werden kann. In der eingeschobenen Einbaulage ist die Leuchteneinheit 66 hier über Schraubverbindungen 89 an der Abschlusswand 42 fixiert. Natürlich wären auch andere Fixiermittel wie Laschen, Leisten oder dgl. denkbar. Die flächige Abstützung des Leuchtengehäuses 70 an der Gegenfläche 82 hat dabei den Vorteil, dass die Fixiermittel selbst keine Aufprallkräfte übernehmen und somit sich nicht an Crashgesichtspunkten orientieren werden müssen. Gleichfalls wäre es auch denkbar, die Schiebeführungen 84,85 etwa horizontal anzuordnen und demgemäß die Leuchteinheit 66 waagerecht einzuschieben. Auch eine schräge Anordnung der Schiebeführungen 84,85 wäre möglich. Neben dem innerhalb des Leuchtengehäuses 70 aufgenommenen Reflektor 68 ist eine Lichtquelle 99 gestrichelt angedeutet, die hier über eine Montage - und Wartungsöffnung 98 (Fig.3) in der Abschlusswand 42 von hinten her zugänglich ist. Die Kabel 100 der Lichtquelle 99 können durch diese Öffnung 98 geführt sein, wobei das Leuchtengehäuse 70 dabei rückwärtig offen ist. Gleichfalls wäre es denkbar, die Schiebeführungen 84,85 in Kombination mit dem Leisten 86,87 zur Stromversorgung der Lichtquelle 98 als Stromschienen zu verwenden.

In Fig.5 ist ausschnittsweise eine schematische, perspektivische Seitenansicht auf die vordere Abschlusswand 42 und die daran befestigte Leuchteinheit 66 nach den Figuren 3 und 4 gezeigt. Dabei ist erkennbar, dass die Scheibe 72 an die gestrichelt angedeutete Bugkontur des Fahrzeugs angepasst ist. Dabei sind die die Tragstruktur im Bereich der Leuchteinheit verkleidenden Beplankungsteile 88 (Fig.2) so zu gestalten, dass das jeweilige Leuchtengehäuse 70 in die Schiebeführungen 84,85 einschiebbar ist. Natürlich wäre es auch denkbar, das Leuchtengehäuse 70 über eine Steckverbindung, beispielsweise durch axiales Aufstecken, an der Abschlusswand 42 zu befestigen.

Die Leuchteinheit 66 kann natürlich auch an der hinteren Abschlusswand 64 als Heckleuchteinheit, oder seitlich der Tragstruktur als Blinkerleuchteinheit an tragenden Bauteilen der Tragstruktur befestigt werden. Anstelle der hier beschriebenen Tragstruktur aus ebenen Leichtbauplatten kann natürlich auch eine Tragstruktur in einer heute üblichen Karosserieschalen- oder Rahmenbauweise verwendet werden. Neben der Leuchteinheit 66 können auch weitere Aggregate, insbesondere das Frontmodul 44 oder ein gleichartiges Heckmodul über weitere Schiebeführungen an der zugeordneten Abschlusswand 42,64 festgelegt sein. Dabei können die weiteren Aggregate ebenfalls über ein als Deformationsteil ausgebildetes Gehäuse verfügen.

Im Falle eines Frontalunfalls weist die Tragstruktur vorzugsweise eine Deformationsreihenfolge auf, bei der zunächst das Frontmodul 44 mit dem Querträger 94 und den Längsschenkeln 96 deformiert wird. Bei einem stärkeren Aufprall wird dann die energieabsorbierende Leuchteinheit 66 sowie eventuell weitere vor der Abschlusswand 42 angeordnete Module beaufschlagt, bevor dann die Vorbaustruktur 24 mit den vorderen Längsträgern 34 zur weiteren Absorption der Unfallenergie herangezogen wird. Die Sicherheitsfahrgastzelle bleibt auch bei starken Unfällen weitestgehend in ihrer Form erhalten. Mit anderen Worten trennt die vordere Abschlusswand 42 den Bagatellschadenbereich der Tragstruktur von dem Knautschbereich für schwerere Unfälle, d.h. die vor der Abschlusswand 42 liegenden Bauteile wie die Leuchteinheiten 66 können beim Frontalaufprall verformt werden, ohne dass die dahinterliegende Struktur bereits Deformationen erfährt. Auf diese Weise wird die Leuchteinheit 66 zum effektiven Energieabsorber der die dahinter liegende, oft nur mit hohem Aufwand instandsetzbare Tragstruktur zumindest im Bereich geringer bis mittlerer Unfallschweren schützt. Die Leuchteinheit 66 wird deformiert, indem sie zwischen Hindernis und Strukturwand gequetscht wird. Dabei kann durch die Werkstoffwahl und Wanddickendimensionierung des Leuchtengehäuses 70, oder durch Verrippungen der Gehäusewand das Energieabsorptionsvermögen der gesamten Leuchteinheit 66 beeinflusst werden.
Gemäß der Vorbaustruktur 24 ist bevorzugt auch die Heckstruktur 54 ausgebildet.

## Patentansprüche

1. Kraftfahrzeug mit einer Leuchteinheit (66), die am nach außen gewandten Ende einer Tragstruktur des Fahrzeugs angeordnet ist, wobei die Anordnung der Leuchteinheit (66) aus einem Reflektor (68), einer lichtdurchlässigen Scheibe (72) und einem Leuchtengehäuse (70) eine Baueinheit bildet, wobei das Leuchtengehäuse (70) als ein energieabsorbierendes Deformationsglied ausgebildet ist, welches den Umfang des zugehörigen Reflektors (68) umschließt
**dadurch gekennzeichnet, dass** das Leuchtengehäuse (70) rohrartig ausgebildet ist und bei einer den Bagatellschadenbereich des Kraftfahrzeugs deformierenden übermäßigen Aufprallbelastung infolge axialer Abstützung seiner rückwärtigen Stirnseite (80) an einer Gegenfläche (82) der Tragstruktur unter Längenverkürzung kollabiert.

2. Kraftfahrzeug nach Anspruch 1,
**dadurch gekennzeichnet,**
**dass** die Gegenfläche (82) der Tragstruktur in einer weitgehend vertikalen Fahrzeugquerebene angeordnet ist und etwa parallel zur rückwärtigen Stirnseite (80) des Leuchtengehäuses (70) verläuft.

3. Kraftfahrzeug nach Anspruch 1,
**dadurch gekennzeichnet,**
**dass** das Leuchtengehäuse (70) zumindest im Bereich der rückwärtigen Stirnseite (80) einen etwa rechteckigen Querschnitt aufweist.

4. Kraftfahrzeug nach Anspruch 1,
**dadurch gekennzeichnet,**
**dass** die lichtdurchlässigen Scheibe (72) aus Polycarbonat besteht und entlang ihrem Umfang kraftverteilend mit der nach außen gewandten Stirnseite (78) des Leuchtengehäuses (70) verbunden ist.

5. Kraftfahrzeug nach Anspruch 2,
**dadurch gekennzeichnet,**
**dass** die Gegenfläche (82) ein ebener Bereich einer Abschlusswand (42,64) der Tragstruktur ist.

6. Kraftfahrzeug nach Anspruch 5,
**dadurch gekennzeichnet,**
**dass** die Abschlusswand (42,64) eine insbesondere aus einem Strangpressprofil bestehende Leichtbauwand ist.

7. Kraftfahrzeug nach Anspruch 2,
**dadurch gekennzeichnet,**
**dass** das Leuchtengehäuse (70) mit seinem der Gegenfläche (82) der Tragstruktur zugewandten Bereich in Führungen (84,85) eingeschoben ist, die an der Gegenfläche (82) angeordnet sind.

8. Kraftfahrzeug nach Anspruch 6 und 7,
**dadurch gekennzeichnet,**
**dass** die Führungen (84,85) einteilig mit der Abschlusswand (42,64) ausgebildet sind.

9. Kraftfahrzeug nach Anspruch 5,
**dadurch gekennzeichnet,**
**dass** zur Anbringung des Leuchtengehäuses (70) an der Abschlusswand (42,64) eine Steckverbindung vorgesehen ist.

10. Kraftfahrzeug nach Anspruch 1,
**dadurch gekennzeichnet,**
**dass** die Gegenfläche (82) etwa im Überdeckungsbereich mit einem zugeordneten Längsträgerende liegt.

11. Kraftfahrzeug nach Anspruch 1,
**dadurch gekennzeichnet,**
**dass** die Tragstruktur des Kraftfahrzeugs überwiegend aus planparallelen Leichtbauplatten zusammengesetzt ist, wobei aus Leichtbauplatten (36,38;58,60) bestehende Längsträger (34,56) an ihrem Ende eine Leichtbauplatte als Abschlusswand (42,64) tragen.

## Claims

1. Motor vehicle with a lamp unit (66), which is disposed on the outwardly directed end of the supporting structure of the vehicle, in which the lamp unit (66) is provided as a unit comprising a reflector (68), a transparent pane (72) and a lamp housing (70), which lamp housing (70) is designed as an energy-absorbing deformation member surrounding the periphery of the co-operating reflector (68),
**characterised in that**
the lamp housing (70) is of a tubular design and collapses, becoming shorter in length, in the event of excessive stress due to an impact deforming the region of the motor vehicle where minor damage occurs, due to the fact that its rear end face (80) is axially supported on an opposite surface (82) of the supporting structure.

2. Motor vehicle as claimed in claim 1,
**characterised in that**
the opposite surface (82) of the supporting structure is disposed in a substantially vertical vehicle transverse plane and extends more or less parallel with the rear end face (80) of the lamp housing (70).

3. Motor vehicle as claimed in claim 1,
**characterised in that**
the lamp housing (70) has an approximately rectangular cross-section, at least in the region of the rear end face (80).

4. Motor vehicle as claimed in claim 1,
**characterised in that**
the transparent pane (72) is made from polycarbonate and is joined to the outwardly directed end face (78) of the lamp housing (70) along its periphery in order to distribute force.

5. Motor vehicle as claimed in claim 2,
**characterised in that**
the opposite surface (82) is a flat region of an end wall (42, 64) of the supporting structure.

6. Motor vehicle as claimed in claim 5,
**characterised in that**
the end wall (42, 64) is a lightweight wall comprising an extruded section in particular.

7. Motor vehicle as claimed in claim 2,
**characterised in that**
the lamp housing (70) is inserted in guides (84, 85) disposed on the opposite surface (82) by means of its region directed towards the opposite surface (82) of the supporting structure.

8. Motor vehicle as claimed in claim 6 and 7,
**characterised in that**
the guides (84, 85) are made integrally with the end wall (42, 64).

9. Motor vehicle as claimed in claim 5,
**characterised in that**
a plug-in connection is provided on the end wall (42, 64) as a means of mounting the lamp housing (70) .

10. Motor vehicle as claimed in claim 1,
**characterised in that**
the opposite surface (82) lies more or less in the region overlapping with the end of an associated longitudinal member.

11. Motor vehicle as claimed in claim 1,
**characterised in that**
the supporting structure of the motor vehicle is predominantly made up of plane-parallel lightweight panels and longitudinal members consisting of lightweight panels (36, 38; 58, 60) support a lightweight panel in the form of an end wall (42, 64) at their end.

## Revendications

1. Véhicule avec une unité d'éclairage (66) qui est disposée sur l'extrémité, tournée vers l'extérieure, d'une structure portante du véhicule, l'agencement de l'unité de l'éclairage (66) étant constitué d'un réflecteur (68), d'une vitre (72) perméable à la lumière et d'un boîtier de lampe (70) formant un module, le boîtier de lampe (70) étant conçu comme un élément de déformation absorbant de l'énergie, lequel enferme le pourtour du réflecteur (68) spécifique, **caractérisé en ce que** le boîtier de lampe (70) est conçu en forme de tube et, dans le cas d'une sollicitation par choc excessive déformant la zone de dégât mineur du véhicule, s'effondre en raison de l'appui axial de sa face frontale (80) arrière sur une contre-surface (82) de la structure portante avec réduction de la longueur.

2. Véhicule selon la revendication 1, **caractérisé en ce que** la contre-surface (82) de la structure portante est disposée dans un plan transversal du véhicule largement vertical et est agencée à peu près parallèlement à la face frontale (80) arrière du boîtier d'éclairage (70).

3. Véhicule selon la revendication 1, **caractérisé en ce que** le boîtier de lampe (70) présente une section à peu près rectangulaire au moins dans la zone de la face frontale (80) arrière.

4. Véhicule selon la revendication 1, **caractérisé en ce que** la vitre (72) perméable à la lumière est à base de polycarbonate et est reliée le long de son pourtour avec une répartition de la force à la face frontale (78), dirigée vers l'extérieur, du boîtier de lampe (70).

5. Véhicule selon la revendication 2, **caractérisé en ce que** la contre-surface (82) est une zone plane d'une paroi terminale (42, 64) de la structure portante.

6. Véhicule selon la revendication 5, **caractérisé en ce que** la paroi terminale (42, 64) est une paroi en construction allégée en particulier à base d'un profilé extrudé.

7. Véhicule selon la revendication 2, **caractérisé en ce que** le boîtier de lampe (70) est introduit avec sa zone tournée vers la contre-surface (82) de la structure portante dans des guides (84, 85) qui sont disposés sur la contre-surface (82).

8. Véhicule selon les revendications 6 et 7, **caractérisé en ce que** les guides (84,85) sont réalisés d'une seule pièce avec la paroi terminale (42, 64).

9. Véhicule selon la revendication 5, **caractérisé en ce qu'**une liaison par emboîtement est prévue pour le placement du boîtier de lampe (70) sur la paroi terminale (42,64).

10. Véhicule automobile selon la revendication 1, **caractérisé en ce que** la contre-surface (82) est disposée à peu près dans la zone de recouvrement avec une extrémité de longeron attribuée.

11. Véhicule automobile selon la revendication 1, **caractérisé en ce que** la structure portante du véhicule automobile est composée principalement de plaques de construction allégée planes et parallèles, des longerons (34, 56) à base de plaques de construction allégées (36, 38, 58, 60) portant sur leur extrémité une plaque de construction allégée comme paroi terminale (42, 64).
